# EUROPÄISCHE PATENTANMELDUNG

(11) **EP 4 751 800 A1**
(43) Veröffentlichungstag der Anmeldung: **03.06.2026**
(21) Anmeldenummer: 25218079.9
(22) Anmeldetag: 24.11.2025
(51) Int. Cl.: B01F 23/232, B01F 25/432, B01F 33/501, B01F 33/503, C02F 1/74, A01K 63/04, B01F 23/234

(54) **EINRICHTUNG UND VERFAHREN ZUM UMWÄLZEN EINES FLÜSSIGKEITSKÖRPERS SOWIE VERWENDUNG**

(30) Priorität: 28.11.2024 DE 102024135258; 28.11.2024 DE 102024004536; 27.05.2025 DE 102025120718
(71) Anmelder: Neumann&Co Wasserzähler Glaubitz GmbH, 01612 Glaubitz (DE)
(72) Erfinder: Neumann, Werner, 01069 Dresden (DE)
(74) Vertreter: Gottfried, Hans-Peter

(57) **Zusammenfassung**

Einrichtung und Verfahren zum Umwälzen eines Flüssigkeitskörpers, umfassend eine Umwälzanordnung (1). Nach der Erfindung ist die Umwälzanordnung (1) als Zwangsmischer (1) ausgeführt, der passiv wirkt und mittels eingebauter Leiteinrichtung (24), die wenigstens zwei im Inneren eines Gehäuses (2) des Zwangsmischers (1) zwischen einer Eintrittsöffnung (12) und einer Austrittsöffnung (14) separat geführte, sich kreuzende Strömungen (16) erzeugen, wobei eine untere Flüssigkeitsschicht (8) nach oben und eine obere Flüssigkeitsschicht (10) zugleich nach unten gefördert wird, wobei der Zwangsmischer (1) bis an den unteren Bereich der unteren Flüssigkeitsschicht (8), die mit der oberen Flüssigkeitsschicht (10) ausgetauscht werden soll, reicht. Verwendung einer Einrichtung zum Umwälzen eines Flüssigkeitskörpers.

## Beschreibung

Die Erfindung betrifft eine Einrichtung und ein Verfahren zum Umwälzen eines Flüssigkeitskörpers, beispielsweise des Oberflächenbereichs eines Gewässers, insbesondere eines Fischteiches, oder des Flüssigkeitskörpers im Klärbecken einer Anlage zur Abwasserreinigung. Die Erfindung betrifft eine Verwendung einer Einrichtung zum Umwälzen eines Flüssigkeitskörpers. Als Flüssigkeitskörper wird das Volumen an Flüssigkeit, z. B. Wasser, bezeichnet, das einer Behandlung, dem Umwälzen, unterzogen werden soll. Dies betrifft in der Regel bei einem See oder Teich die oberen 50 cm, bei einem Klärbecken das gesamte enthaltene Wasser.

Neben dem Schutz und der Sanierung natürlicher Gewässer ist ein ausreichender Sauerstoffgehalt insbesondere auch für die Fischzucht von Bedeutung. Für verschiedene Fischarten sind Grenzwerte für den Sauerstoffgehalt im Wasser bekannt, beim Karpfen z. B. 3 mg/L. Das Minimum tritt in den Morgenstunden zwischen 6 und 8 Uhr auf. Der Besatz und die Entwicklung der Fische sind wesentlich für den Sauerstoffverbrauch im Teich. Auch bei Fütterung ist der Sauerstoffbedarf erhöht. Dasselbe trifft auf Aquakulturen zur intensiven Zucht von Fischen zu. Ebenfalls für Kläranlagen und die dort ablaufenden Abbauprozesse ist die Umwälzung wichtig, was herkömmlich durch strömungstechnisch ineffiziente Rührwerke erfolgt, die einen hohen Energieeinsatz erfordern.

Durch das Umwälzen kann das Wasser in der traditionellen Fischwirtschaft über mehrere Jahre genutzt werden, da schädliche Abbauvorgänge, die die Wasserqualität beeinträchtigen, stark reduziert werden. Es erfolgt eine Verwirbelung und Durchmischung des Flüssigkeitskörpers mit Belüftung und Sauerstoffeintrag. Die Belüftung nutzt dabei den Effekt, dass an der Wasseroberfläche in einer dünnen Schicht eine Sättigung mit Sauerstoff eintritt, tiefere Schichten jedoch davon nicht profitieren, wenn keine Durchmischung erfolgt. Mit Belüftung ist eine ganzjährige Fischproduktion möglich, ohne dass in Zeiten eines geringen Sauerstoffgehalts die Fischpopulation beeinträchtigt wird. Die Einrichtung kann in gleicher Weise auch für Fischgehege, für Aquakultur, eingesetzt werden, um optimale und kontrollierte Bedingungen in den Fischgehegen aufrechtzuerhalten.

Die erfindungsgemäße Einrichtung und das erfindungsgemäße Verfahren ermöglichen weiterhin eine effiziente und kontrollierte Gewässersanierung, die erforderlich wird, wenn ein Nährstoffüberangebot ein biologisches Ungleichgewicht entstanden, das Gewässer "gekippt" ist, Faulgase entstehen oder sich eine große Menge Schlamm am Boden abgelagert hat. Die Einrichtung ist ortsunabhängig einsetzbar, auf dem Gewässer einfach umsetzbar und einzelne Gewässerteile, z. B. eine Bucht, können separat beeinflusst werden.

Derartige Einrichtungen sind in vielfältiger Ausführung aus dem Stand der Technik bekannt, beispielsweise aus den Druckschriften DD 138 421 A1, DD 140 004 A1, DD 210 446 A1, DD 273 827 A1, DE 20 52 997 A, DE 243 55 66 A1, DE 283 22 74 C2, DE 871 01 72 U1. Soweit dort der Energieverbrauch thematisiert ist, wird durch eine entsprechende Gestaltung der Vorrichtung ein reduzierter Energiebedarf als Vorteil ausgewiesen. Eine Bereitstellung von kostengünstiger oder erneuerbarer Energie wird hingegen nicht beschrieben.

Die Druckschrift DE 34 01 119 A1 befasst sich mit einer Einrichtung zum Umwälzen von Oberflächengewässern, bei der in das Oberflächengewässer die Windflügel eines Windrads an der Stelle der größten Umfangsgeschwindigkeit ins Wasser eingetaucht werden. Ein Verbindungsprofil zu einem zweiten auf einer gemeinsamen Welle befestigtem Windrad schleudert Wassermengen auf, die dann wieder in Tropfenform auf die Wasseroberfläche fallen und somit den Sauerstoffgehalt des Wassers erhöhen sollen. Das eintauchende Windrad kann bei Fischzuchtanlagen die Fische verletzten und arbeitet vor allem nur bei Wind, sodass bei windarmen Wetterlagen die Umwälzung nicht gesichert ist.

Vielfach werden zum Umwälzen Propellerrührwerke eingesetzt, wie sie in unterschiedlichen Ausgestaltungen in den Druckschriften DE 31 44 487 C2, DE 42 18 027 A1 und DE 43 25 161 A1 beschrieben werden. Diese Rührwerke sind weit verbreitet, weisen jedoch einen hohen Energieverbrauch und eine geringe Effizienz auf, da viele Trublenzen in der Flüssigkeit hervorgerufen werden, die Wirkung jedoch nur wenige Meter weit reicht.

Es ist Aufgabe der Erfindung, eine energiesparende, effiziente, die Wasserlebewesen schonende Einrichtung und ein Verfahren zum Umwälzen des Wassers eines Flüssigkeitskörpers anzubieten. Aufgabe der Erfindung ist es ebenfalls, entsprechende Verwendungen anzubieten.

Die Aufgabe wird gelöst durch eine Einrichtung zum Umwälzen des Wassers eines Flüssigkeitskörpers, beispielsweise des Oberflächenbereichs eines Gewässers, insbesondere eines Fischteiches, oder des Klärbeckens einer Anlage zur Abwasserreinigung. Die Einrichtung umfasst eine Umwälzanordnung und vorzugsweise, nach einer vorteilhaften Weiterbildung, auch eine zugehörige oder externe Vortriebeinrichtung. Alternativ kann die für den Umwälzvorgang notwendige Relativbewegung zwischen Flüssigkeitskörper und Zwangsmischer auch auf andere Weise erreicht werden, z. B. durch ein Hindurchdrücken der Flüssigkeit durch die Umwälzanordnung.

Nach der Erfindung ist die Umwälzanordnung als passiver Zwangsmischer ausgeführt, der mittels eingebauter Leiteinrichtung, die wenigstens zwei im Inneren des Zwangsmischers zwischen einer Eintrittsöffnung und einer Austrittsöffnung separat geführte, sich kreuzende Strömungen erzeugt. Die passive Wirkung entsteht durch eine Relativbewegung zwischen Zwangsmischer und Flüssigkeitskörper. Dazu kann der Flüssigkeitskörper durch den Zwangsmischer hindurchgedrückt, vorzugsweise jedoch der Zwangsmischer durch den Flüssigkeitskörper hindurch bewegt werden. Eine untere Flüssigkeitsschicht wird nach oben und eine obere Flüssigkeitsschicht zugleich nach unten gefördert. Der Zwangsmischer reicht bis an den unteren Bereich der unteren Flüssigkeitsschicht, die mit der oberen Flüssigkeitsschicht ausgetauscht werden soll.

Das Erzeugen der sich kreuzenden Strömungen geschieht ohne eine eigene Einrichtung zur Strömungserzeugung während der Vortriebbewegung. Dabei wird eine untere Flüssigkeitsschicht nach oben und eine obere Flüssigkeitsschicht zugleich nach unten gefördert. Der Zwangsmischer muss daher bis an den unteren Bereich der unteren Flüssigkeitsschicht, die mit der oberen Flüssigkeitsschicht gemischt werden soll, reichen.

Die Vorteile des Zwangsmischers liegen in der schonenden Vermischung der Flüssigkeitsschichten, die im Wasser eines Gewässers keine schädigende Wirkung auf Kleinlebewesen im Wasser ausübt. Zudem ist die Anwendung mit einem minimalen Energieeinsatz verbunden, weil kaum Strömungsverluste eintreten. Mangels beweglicher Teile ist der Zwangsmischer sehr robust, langlebig und einfach aufgebaut. Durch die wechselseitige vertikale Bewegung der Flüssigkeit - eine Strömung wird von unten nach oben, die andere, gleichgroße Strömung gleichzeitig von oben nach unten geführt - heben sich die Kräfte auf, sodass im Wesentlichen nur Verluste durch Reibung verbleiben, die einen Energieeinsatz erfordern.

Vorteilhaft ist weiterhin, dass nur die oberen Flüssigkeitsschichten eines natürlichen Gewässers - in der Regel die oberen 50 cm - durchmischt werden. Die unteren Flüssigkeitsschichten, die nicht nach oben kommen dürfen, bleiben unberührt.

Neben der Unterstützung der Verbesserung der natürlichen Diffusion von Sauerstoff aus der Luft in das Wasser, der Sauerstoffanreicherung, wird ein weiterer Effekt, die Sauerstoffproduktivität, unterstützt. Die Sauerstoffproduktivität betrifft die Abgabe von Sauerstoff insbesondere durch Algen oder andere Organismen bei Sonneneinstrahlung. Die Sauerstoffproduktivität ist der bedeutendere Faktor für den Sauerstoffgehalt im Wasser. In trüben Gewässern, z. B. bei der Karpfenzucht, aber auch in Klärbecken, wird nur der obere Bereich vom Sonnenlicht durchstrahlt, während die darunter treibenden Algen und anderen Organismen mangels Belichtung keine oder nur geringe Aktivität entfalten können. Werden diese Algen und Organismen beim Umwälzen nach oben, zum Licht befördert, können sie ihre Aktivität wieder aufnehmen, während die nun nach unten verbrachten Algen und Organismen ihre Aktivität noch eine Zeitlang weiterführen können.

Eine zur Umwälzung genutzte Pumpe würde im Vergleich zum erfindungsgemäßen Zwangsmischer deutlich mehr Energie verbrauchen. Um die Oberfläche eines kleineren Sees von 1 ha Fläche bis zu einer Tiefe von 0,5 m zu behandeln, müssen 5000 m³ umgewälzt werden. Eine Pumpe mit einer Leistung von 750 W kann 20 m³/h umwälzen.

Die Leiteinrichtung oder mehrere Leiteinrichtungen sind innerhalb eines im Wesentlichen quaderförmigen Gehäuses angeordnet. Dessen parallel zueinander angeordnete Deckfläche und Grundfläche sowie zwei gegenüberliegende Seitenwände sind geschlossen. Die beiden anderen Seitenflächen sind offen, um die Eintrittsöffnung und die Austrittsöffnung zu bilden.

Im Inneren des Gehäuses erstrecken sich die Leiteinrichtung, die an der Eintrittsöffnung und an der Austrittsöffnung mittig zwischen einer oberen und einer unteren Hälfte des Gehäuses eine horizontale Trennkante zeigen, die dem Mittendurchgang von zwei Abschnitten einer Sinuskurve entsprechen. Die Leiteinrichtung besteht aus zwei aneinander gefügten Wendelabschnitten von in gegengesetzter Richtung um 180° um eine Achse, die der Strömungsrichtung entspricht, gewendelten Spiralen, ähnlich Spiral-Turbulatoren. Dadurch entstehen ein erster Strömungskanal mit einer ersten Vertikalkomponente zwischen beiden Wendelabschnitten und ein zweiter Strömungskanal mit einer zweiten, zur ersten Vertikalkomponente gegenläufigen Vertikalkomponente zwischen jeweils einem Wendelabschnitt und der angrenzenden Seitenfläche. Die Horizontalkomponenten der Strömung sind gleich ausgerichtet, die Vertikalkomponenten bewirken, dass die obere Flüssigkeitsschicht nach unten und die untere Flüssigkeitsschicht nach oben gelangen.

Nach einer vorteilhaften Ausgestaltung sind wenigstens zwei quaderförmige Gehäuse mit den Seitenwänden aneinandergefügt. Dadurch kann eine größere Breite der Wasseroberfläche mit einem Durchgang behandelt, d. h. umgewälzt werden.

Nach einer alternativen Ausführungsform sind die geschlossen Seitenflächen halbkreisförmig gewölbt. Dadurch können die beiden Teile des äußeren Strömungskanals besser durchströmt werden, da ein größerer Querschnitt zur Verfügung steht.

Nach einer vorteilhaften Weiterbildung ist wenigstens ein Zusatzaggregat zur Verbesserung des Sauerstoffeintrags am Eintritt und/oder am Austritt vorgesehen ist. Dies verbessert den Sauerstoffeintrag in die Flüssigkeit, insbesondere das Wasser, weil die Grenzfläche zur Luft sehr schnell mit Sauerstoff gesättigt ist, was den weiteren Eintritt des Sauerstoffs in die nachfolgenden Flüssigkeitsschichten behindert. Die Grenzfläche muss deshalb unterbrochen und das gesättigte Wasser der oberen Schicht mit den darunter liegenden Schichten vermischt werden. Ist das Zusatzaggregat zur Verbesserung des Sauerstoffeintrags jeweils am Eintritt und am Austritt angebaut, wird in der oberen Schicht (die vor dem Zwangsmischer oben ist) und der unteren Schicht (die hinter dem Zwangsmischer oben ist) der Sauerstoffgehalt in der gesamten Schicht verteilt und damit in dem ganzen behandelten Flüssigkeitskörper angereichert.

Vorzugsweise kommen als Zusatzaggregate zur Verbesserung des Sauerstoffeintrags ein horizontal im Bereich der Wasseroberfläche angeordnetes Sieb, eine Siebtrommel oder eine Bürstenwalze zum Einsatz. Diese tauchen teilweise in die Wasseroberfläche ein und sorgen, ggf. unterstützt durch Bewegung, für die gewünschte Durchmischung der oberen Flüssigkeitsschicht.

Es hat sich als vorteilhaft erwiesen, wenn an einer Austrittsöffnung eine Abrisskante angeordnet ist. Diese erhöht die Verwirbelung der Flüssigkeitsschichten beim Austritt aus dem Zwangsmischer.

Nach einer bevorzugten Ausführungsform sind drei separate, durch Horizontalwände abgetrennte Leiteinrichtungen in einem Gehäuse zusammengefasst. Das Gehäuse weist eine Arbeitsbreite von 2 m, eine Länge von 1 m und eine Höhe von 0,5 m oder einer Skalierung dieser Dimensionen, beispielsweise um einen Faktor 1,5 oder 2, auf. Die Arbeitsbreite ist beliebig erweiterbar durch Aneinanderreihung mehrerer Zwangsmischer. Die bevorzugte Länge von 1 m ergibt sich aus einer vorteilhaften Wasserlinienlänge und der erreichbaren Energieeinsparung, wenn die Bugwelle aus der Vortriebbewegung nicht überfahren werden muss. Bei einer Geschwindigkeit von weniger 1 m/s und einer Länge von 1 m wird dies erreicht. Der geringste Energieverbrauch erfordert eine Geschwindigkeit zwischen 0,4 und 0,5 m/s. Diese Maße sind optimiert für die Verwendung in einem Fischteich oder in einer Anlage für Aquakultur.

Alternativ kann eine andere Höhe als 0,5 m vorgesehen werden. Dann wird die Länge entsprechend angepasst. Ebenso kann umgekehrt das Einstellen und Anpassen der Höhe in Relation zur Länge erfolgen.

Wird eine größere Arbeitsbreite gewünscht, sind mehrere Zwangsmischer nebeneinander angeordnet. Wird hingegen eine größere Arbeitshöhe bei höheren Fluidständen und das Umwälzen größerer Flüssigkeitstiefen benötigt, beispielsweise um ein Klärbecken in der gesamten Tiefe umzuwälzen, kommen folgende Alternativen in Betracht unter der Maßgabe, dass Zwangsmischer in einer Ausführungsform mit den zuvor beschriebenen Maßen zum Einsatz kommt:
- ein einzelner Zwangsmischer wird schichtweise in der Höhe mit einem Hub von 0,5 m jeweils nach dem Durchfahren des Flüssigkeitskörpers versetzt, sodass nacheinander schrittweise die gesamte Höhe des umzuwälzenden Flüssigkeitskörpers durchfahren wird,
- mehrere vertikal, übereinander angeordnete Zwangsmischer, wobei deren Gesamthöhe der Höhe des umzuwälzenden Flüssigkeitskörpers, abzüglich 0,5 m, entspricht, und wobei die Zwangsmischer zusammen nach dem Durchfahren des Flüssigkeitskörpers jeweils um einen Hub von 0,5 m abwechselnd nach oben und nach unten versetzt werden.

Bei den vorgenannten Ausführungsformen ist die Funktion in beiden Bewegungsrichtungen gleichermaßen gegeben. Die Umwälzung erfolgt jedoch Schicht für Schicht in jedem der horizontal übereinander angeordneten Zwangsmischer.

Eine sofortige Umwälzung der Flüssigkeit über mehrere Schichten hinweg ist möglich, wenn die vertikal übereinander angeordneten Zwangsmischer zusätzlich horizontal versetzt sind und dabei der vertikale Versatz jeweils eine halbe Höhe eines Zwangsmischers beträgt. Damit geht einher, dass der austretende Fluidstrom des in Bewegungsrichtung vorderen Zwangsmischers unmittelbar in den darunter und dahinter bzw. drüber und davor angeordneten Zwangsmischer eintritt und darin um eine weitere Schicht stufenweise versetzt wird. Dadurch wird bei einer mehrstufigen derartigen Anordnung die unter Sicht ganz nach oben oder die obere Schicht ganz nach unten gefördert. In der Folge kann es dann zur weiteren Verwirbelung und Vermischung kommen, wenn eine warme Schicht nach unten gefördert wird dann wieder aufsteigt.

Zum Umwälzen größerer Wassertiefen sind somit mehrere Zwangsmischer horizontal stufenweise versetzt angeordnet, indem die untere Hälfte der Austrittsöffnung des ersten Zwangsmischers an obere Hälfte der Eintrittsöffnung des zweiten Zwangsmischers angrenzt, sodass der Fluidstrom in jedem der versetzt angeordneten Zwangsmischers um die Höhe eines Zwangsmischers vertikal versetzt wird.

Die Funktion ist abhängig von der Bewegungsrichtung. Eine stets gleiche Bewegungsrichtung ist beispielsweise in rotierenden Systemen gewährleistet, in denen die Anordnung von Zwangsmischern an einem in einem runden Becken rotierenden Ausleger befestigt ist. Diese Abhängigkeit bedeutet, dass in einer Richtung die obere Schicht nach unten, in der Gegenrichtung die untere Schicht nach oben gefördert wird. Eine Kombination von unmittelbar übereinander und von zusätzlich horizontal versetzt angeordneten Zwangsmischern kann erfolgen, um eine gewünschte Durchmischung bestimmter Schichten auf eine vorgegebene Weise zu erreichen.

Für die Verwendung in einem Klärbecken, in einer Kläranlage, wo der komplette Flüssigkeitskörper des Klärbeckens umgewälzt werden muss, richten sich die Maße der Anordnung von Zwangsmischern im Wesentlichen nach den Dimensionen des Klärbeckens. Dabei hat es sich auch als vorteilhaft erwiesen, wenn mehrere Zwangsmischer übereinander angeordnet sind, die die Schichten nacheinander umwälzen.

Die schichtweise Bearbeitung des Fluidkörpers wird möglich durch den laminaren Austausch der sauber getrennten Schichten in dem erfindungsgemäßen Zwangsmischer. Auch andere Flüssigkeiten, insbesondere in Reaktionsbecken, z. B. Flotationslösungen oder Suspensionen, jeweils ohne grobe Feststoffe und lange Fasern.

Nach einer vorteilhaften Weiterbildung umfasst die Umwälzanordnung einen Luftverdichter oder einen Druckgastank, worüber Luft oder Sauerstoff in das Wasser eingetragen werden können. Bei besonders kritischen Situationen, wenn der Sauerstoffgehalt im unter ein für eine Vielzahl Wasserlebewesen lebensnotwendiges Niveau absinkt, kann durch den Luftverdichter oder den Druckgastank schnell Sauerstoff das Wasser eingetragen und die kritische Situation zügig entschärft werden.

Vorteile ergeben sich auch, wenn die Umwälzanordnung einen Windgenerator und/oder ein Photovoltaikmodul zum Vortrieb umfasst. Dann kann der Energiebedarf für den Vortrieb selbstständig gedeckt werden, eine Batterieladung oder andere Energiezufuhr ist dann nicht mehr nötig.

Als Alternativen für die Vortriebseinrichtung sind ein Schleppboot, ein Seilzug oder ein autonomer Antrieb vorgesehen. Es ist jeweils einen Führung oder ein Schwimmkörper von Vorteil, der den Zwangsmischer in Position hält, insbesondere in horizontaler Ausrichtung und in der gewünschten Höhe, beispielsweise unmittelbar unter der Oberfläche der Flüssigkeit.

Der autonome Antrieb ist nach einer weiteren Alternative als ein rotierendes Zusatzaggregat zur Verbesserung des Sauerstoffeintrags oder als eine Wasserpumpe ausgeführt. Eine rotierende Trommel oder Bürste führt durch ihre Drehbewegung nach Art eines Schaufelrads, wie es beim Schiffsantrieb zum Einsatz kommt, ebenfalls zu einer Fortbewegung. Diese Arten des Vortriebs, die mit einer Beeinflussung der Oberfläche des Flüssigkeitskörpers einhergehen, kommen jedoch nur dann zum Einsatz, wenn kein vertikaler Versatz des oder der Zwangsmischer vorgesehen ist.

Zum Vortrieb kann auch eine Wasserpumpe zum Einsatz kommen, wobei zumindest deren Ansaugstrom, aber auch der Rückstoß eines Sprühstrahls, den Vortrieb bewirken. Wird ein Sprühstrahl erzeugt, fallen Wassertropfen auf die Wasseroberfläche. Nach einer anderen Ausführungsform läuft das Wasser aus der Pumpe über eine Rieselfläche an der Deckfläche des Zwangsmischers und reichert sich dort mit Sauerstoff an, ehe es zurück auf die Wasseroberfläche fließt.

Als besonders vorteilhaft hat es sich erwiesen, wenn der autonome Antrieb über eine GPS-Steuerung verfügt. Dadurch können die Bahnen, die der Zwangsmischer über die Oberfläche des Gewässers zurücklegt, festgelegt und optimiert werden, indem beispielsweise Zonen erhöhten Bedarfs intensiver behandelt werden oder sogar der gemessene Sauerstoffgehalt in die Bahnplanung einfließt.

Die Aufgabe wird ebenfalls gelöst durch ein Verfahren zum Betrieb einer Einrichtung zum Umwälzen eines Flüssigkeitskörpers, wie zuvor beschrieben bzw. gemäß einem der Ansprüche 1 bis 13. Nach der Erfindung ist die Umwälzanordnung als passiver Zwangsmischer ausgeführt, dessen eingebaute Leiteinrichtung während der Vortriebbewegung eine untere Flüssigkeitsschicht nach oben und eine obere Flüssigkeitsschicht zugleich nach unten fördert.

Eine Lösung der Aufgabe der Erfindung erfolgt ebenfalls durch die Verwendung einer Einrichtung nach einem der Ansprüche 1 bis 13 bzw. wie zuvor beschrieben in einem Fischteich oder in einer Anlage für Aquakultur. Alternativ erfolgt die Verwendung einer Einrichtung nach einem der Ansprüche 1 bis 13 bzw. wie zuvor beschrieben in einem Klärbecken einer Kläranlage.

Anhand der Beschreibung von Ausführungsbeispielen und ihrer Darstellung in den zugehörigen Zeichnungen wird die Erfindung nachfolgend näher erläutert. Es zeigen:
Fig. 1: schematisch eine perspektivische Ansicht einer Ausführungsform eines erfindungsgemäßen Zwangsmischers;
Fig. 2: schematisch eine Ansicht von oben einer Ausführungsform einer Leiteinrichtung eines erfindungsgemäßen Zwangsmischers;
Fig. 3: schematisch eine perspektivische Ansicht einer Ausführungsform einer Leiteinrichtung eines erfindungsgemäßen Zwangsmischers;
Fig. 4: schematisch eine perspektivische Ansicht einer weiteren Ausführungsform eines erfindungsgemäßen Zwangsmischers;
Fig. 5: schematisch eine Ansicht von vorn einer Ausführungsform eines erfindungsgemäßen Zwangsmischers;
Fig. 6: schematisch eine perspektivische Ansicht einer Ausführungsform einer Leiteinrichtung eines erfindungsgemäßen Zwangsmischers;
Fig. 7: schematisch eine Seitenansicht einer Ausführungsform eines erfindungsgemäßen Zwangsmischers mit Zusatzaggregat Sieb;
Fig. 8: schematisch eine Seitenansicht einer Ausführungsform eines erfindungsgemäßen Zwangsmischers mit weiterem Zusatzaggregat; und
Fig. 9: schematisch eine Seitenansicht einer Ausführungsform eines erfindungsgemäßen Zwangsmischers mit einer Pumpe als Zusatzaggregat; und
Fig. 10: schematisch eine Seitenansicht einer weiteren Ausführungsform eines erfindungsgemäßen Zwangsmischers mit einer Pumpe als Zusatzaggregat;
Fig. 11 zeigt schematisch eine Seitenansicht einer Ausführungsform einer Anordnung erfindungsgemäßer Zwangsmischer; und
Fig. 12 zeigt schematisch eine Seitenansicht einer weiteren Ausführungsform einer Anordnung erfindungsgemäßer Zwangsmischer.

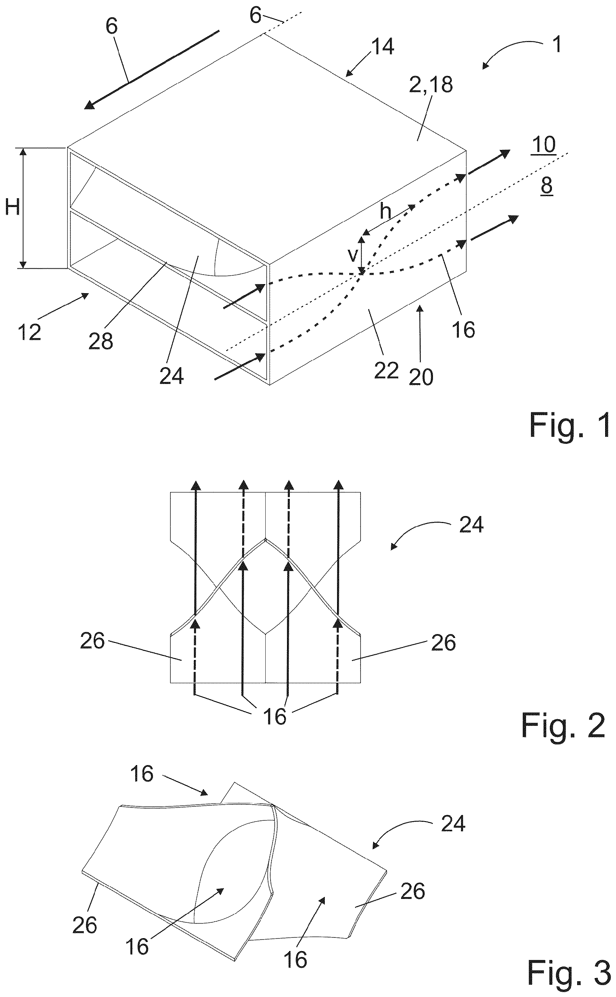

Fig. 1 zeigt schematisch eine perspektivische Ansicht einer Ausführungsform einer Umwälzanordnung 1, die als Zwangsmischer 1 ausgeführt ist. Dieser wird durch das Wasser bewegt (als Vortriebbewegung 6 dargestellt), wobei seine Höhe H beide zu durchmischenden Flüssigkeitsschichten, eine untere Flüssigkeitsschicht 8 und eine obere Flüssigkeitsschicht 68, von der Wasseroberfläche 11 aus durchdringen können muss. Das Gehäuse 2 des Zwangsmischers 1 ist oben durch eine Deckfläche 18 und unten durch eine Grundfläche 20 sowie seitlich durch Seitenflächen 22 begrenzt.

Aus der durch einen Pfeil dargestellten Vortriebbewegung 6 ergibt sich eine Eintrittsöffnung 12 und eine Austrittsöffnung 14. Ebenso ist eine gegenläufige Vortriebbewegung 6 möglich, dann würden sich Eintrittsöffnung 12 und Austrittsöffnung 14 entsprechend ändern. Die sich im Inneren des Zwangsmischers 1 ergebende Strömung 16 wird durch eine gestrichelte Linie an der Seitenwand 22 dargestellt. Die Strömung 16 weist eine Horizontalkomponente h und eine Vertikalkomponente v auf. Bedingt durch die Vertikalkomponente v wird der unten eingetretene Teil des Wassers oben ausgelassen und umgekehrt.

Durch die Leiteinrichtung 24 wird bei der Vortriebbewegung 6 des Zwangsmischers 1 die untere Flüssigkeitsschicht 8 nach oben und die obere Flüssigkeitsschicht 10 nach unten befördert und umgekehrt, was die erwünschte Durchmischung bewirkt. Die Durchmischung erfolgt schonend für die Wasserlebewesen, da keine Scherkräfte in das Wasser eingetragen werden, wie dies beispielsweise bei einer schneller laufenden Mischeinrichtung der Fall wäre. Außerdem erfolgt die Durchmischung mit minimalem Energieeinsatz, das kaum Strömungsverlust auftreten.

Fig. 2 zeigt schematisch eine Ansicht von oben einer Ausführungsform einer Leiteinrichtung 24 eines erfindungsgemäßen Zwangsmischers 1, die aus 2 Wendelabschnitten 26 besteht, die in der Mitte miteinander verbunden sind. Dadurch entstehen zwei Strömungskanäle 16, einer in der Mitte und jeweils an den Rändern ein halber Strömungskanal 16. Die Strömung 16 wird durch vier verschiedene Pfeile dargestellt, je Strömungskanal 16 zwei Pfeile. Dabei bedeuten ein gestrichelter Pfeil, dass die Strömung 16 unterhalb des Materials des Wendelabschnitts 26 verläuft, und eine durchgehende Linie, dass die Strömung 16 oberhalb des Materials verläuft. Daraus wird ersichtlich, dass der innenliegende Strömungskanal 16 die Strömung 16 von oben nach unten und der außenliegende, geteilte Strömungskanal 16 die Strömung 16 von unten nach oben fördert.

Fig. 3 zeigt schematisch eine perspektivische Ansicht einer Ausführungsform einer Leiteinrichtung 24, der aus den beiden Wendelabschnitten 26 besteht, eines erfindungsgemäßen Zwangsmischers 1. Dabei sind wieder der innenliegende Strömungskanal 16 und der außenliegende, geteilte Strömungskanal 16 zu erkennen.

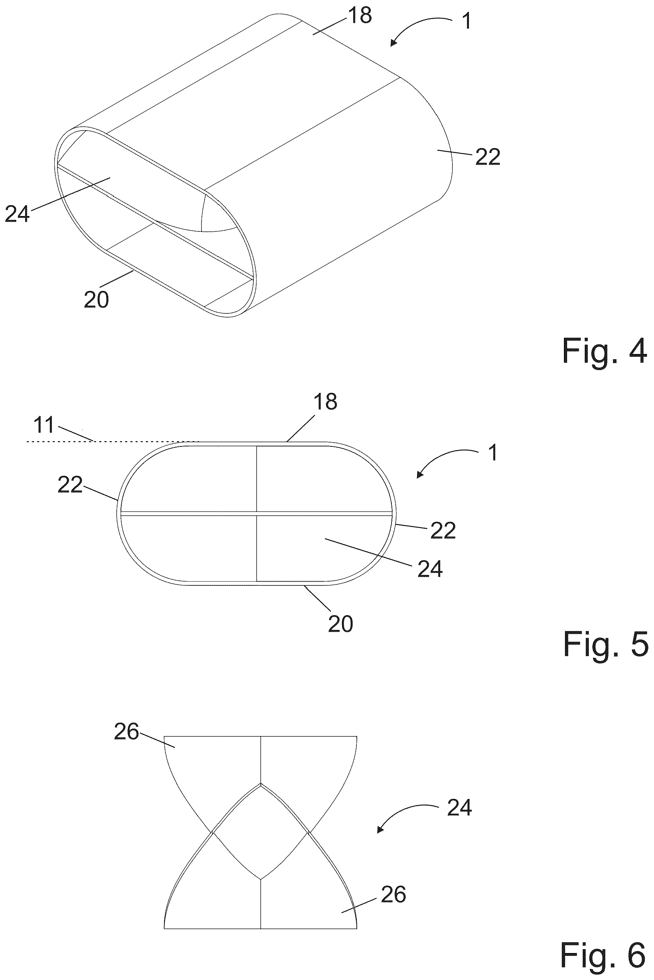

Fig. 4 zeigt schematisch eine perspektivische Ansicht einer weiteren Ausführungsform eines erfindungsgemäßen Zwangsmischers 1, der eine Deckfläche 18 und eine Grundfläche 20 aufweist, bei dem jedoch die Seitenwände 22 halbschalenförmig gewölbt sind. Daraus ergibt sich ein größerer Querschnitt für den außenliegenden, geteilten Strömungskanal 16, der ebenfalls durch die Leiteinrichtung 24 gebildet wird.

Fig. 5 zeigt schematisch eine Ansicht von vorn einer Ausführungsform eines erfindungsgemäßen Zwangsmischers 1 mit halbschalenförmigen Seitenwänden 22, wie bereits in Fig. 4 dargestellt. Die Lage des Zwangsmischers 1 im Wasser ist erkennbar durch Kennzeichnung des Niveaus der Wasseroberfläche 11.

Fig. 6 zeigt schematisch eine perspektivische Ansicht einer Ausführungsform einer Leiteinrichtung 24 eines erfindungsgemäßen Zwangsmischers 1 mit halb schalenförmigen Seitenwänden 22. Auch diese Leiteinrichtung 24 besteht aus zwei zusammengefügten, gegenläufig gewendeten Wendelabschnitten 26.

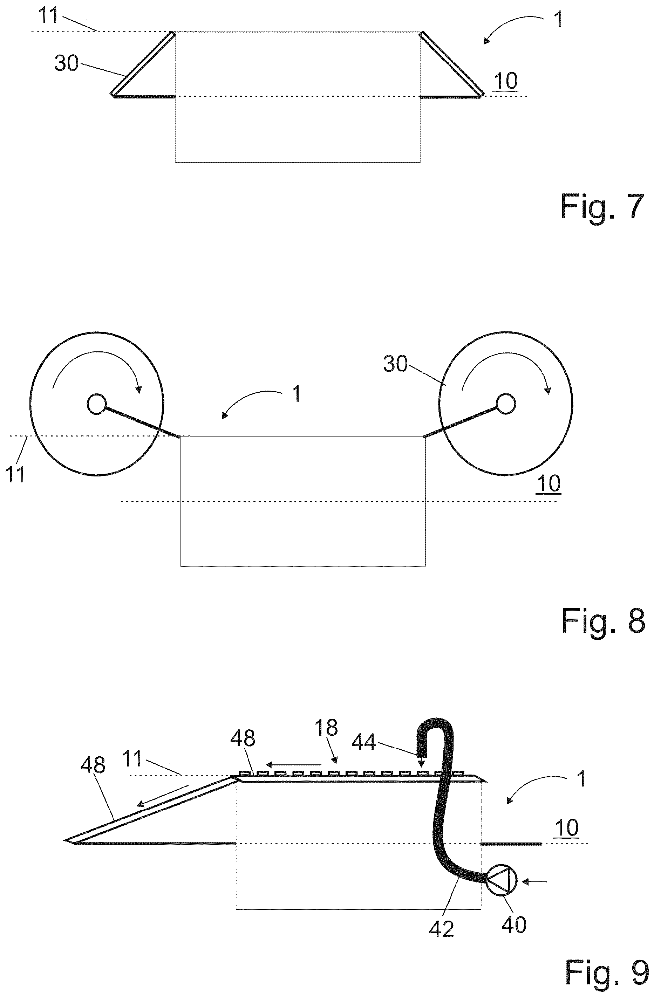

Fig. 7 zeigt schematisch eine Seitenansicht einer Ausführungsform eines erfindungsgemäßen Zwangsmischers 1 mit Zusatzaggregat Sieb 30. Das Sieb 30 ragt schräg in die obere Flüssigkeitsschicht 10 hinein und mischt die obere, mit Sauerstoff gesättigte Flüssigkeitsschicht ein und homogenisiert den Sauerstoffgehalt in der gesamten oberen Flüssigkeitsschicht 10.

Fig. 8 zeigt schematisch eine Seitenansicht einer Ausführungsform eines erfindungsgemäßen Zwangsmischers 1 mit weiterem Zusatzaggregat, einer Siebtrommel 32 oder einer Bürstenwalze 34. Diese können, insbesondere wenn sie sich drehen, ebenfalls für eine Durchmischung innerhalb der oberen Flüssigkeitsschicht 10 sorgen. Zudem können sie die Vortriebbewegung 6 hervorrufen.

Fig. 9 zeigt schematisch eine Seitenansicht einer Ausführungsform eines erfindungsgemäßen Zwangsmischers 1 mit einer Pumpe 40. Die Pumpe 40 saugt gemäß Pfeilrichtung das Wasser an und erzeugt hierdurch einen Vortrieb entgegen der Pfeilrichtung. Es wird durch das Pumpenrohr 42 gefördert und erreicht den Pumpenauslass 44, von wo aus es auf die Rieselfläche 46 fällt. Auf der Rieselfläche 46 mit ihrer großen, durch Einbauten vergrößerten Oberfläche erfolgt eine starke Anreicherung mit Sauerstoff. Das derart angereicherte Wasser fließt, wie die Pfeile zeigen, über die Ablauffläche 48 ins Wasser zurück.

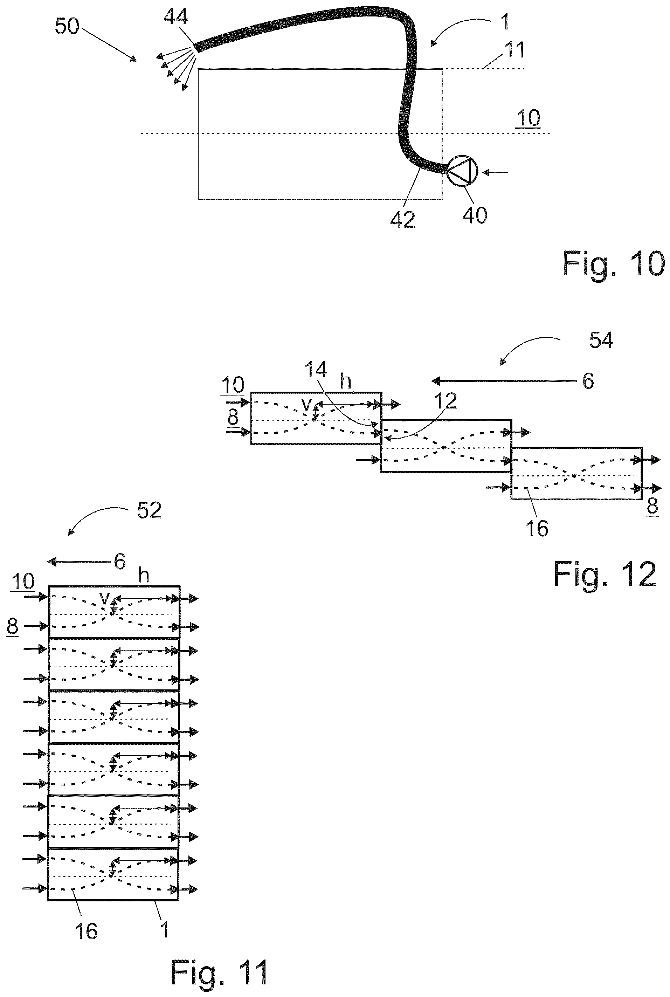

Fig. 10 zeigt schematisch eine Seitenansicht einer weiteren Ausführungsform eines erfindungsgemäßen Zwangsmischers 1 mit einer Pumpe 40, wobei die Ausführung und die Funktion bis hin zum Pumpenauslass 44 der in Fig. 9 beschriebenen entspricht. Der Pumpenauslass 44 ist jedoch in der dargestellten Ausführungsform als eine Düse ausgestaltet, die einen Sprühstrahl 50 abgibt. Der Sprühstrahl 50 besteht aus einzelnen Wassertropfen, die auf dem Weg durch die Luft und zurück in den Flüssigkeitskörper mit Sauerstoff angereichert werden. Zugleich bewirkt der Rückstoß des Sprühstrahls 50 eine Vortriebbewegung des Zwangsmischers 1 entgegen der Pfeilrichtung.

Fig. 11 zeigt schematisch eine Seitenansicht einer Ausführungsform einer Anordnung erfindungsgemäßer Zwangsmischer 1, die übereinander zu einer Vertikalanordnung 52 angeordnet sind. Dadurch kann die Anordnung 52 gleichzeitig mehrere Flüssigkeitsschichten 8, 10 gegeneinander austauschen, wenn sie in Vortriebrichtung 6 durch den Flüssigkeitskörper bewegt wird und die Strömung 16 die vertikale Position über die Vertikalkomponente v in jedem der Zwangsmischer 1 ändert.

Wird die Vertikalanordnung 52 immer in derselben Vertikalposition bzw. Höhe bewegt, dann werden immer nur die zwei gleichen Flüssigkeitsschichten 8, 10 ausgetauscht. Um den gesamten Flüssigkeitskörper nach und nach zu durchmischen, wird nach jedem Durchgang durch den Flüssigkeitskörper in einer Vortriebrichtung 6 die Vertikalanordnung 52 um die halbe Höhe eines Zwangsmischers vertikal nach oben oder unten versetzt. Es genügt dabei, die Vertikalanordnung 52 abwechselnd um diesen Hub nach oben oder unten zu versetzen. Dann wird die zuvor nach unten versetzte Flüssigkeitsschicht 8, 10 nochmal weiter um eine Position nach unten versetzt und umgekehrt.

Fig. 12 zeigt schematisch eine Seitenansicht einer weiteren Ausführungsform einer Anordnung erfindungsgemäßer Zwangsmischer 1, die zu einer Versatzanordnung 54 angeordnet sind, indem die untere Hälfte der Austrittsöffnung 14 des oberen Zwangsmischers 1 mit der oberen Hälfte der Eintrittsöffnung 12 des unteren Zwangsmischers 1 in der Weise verbunden ist, dass der Fluidstrom 16 in jedem der versetzt angeordneten Zwangsmischers 1 um die Höhe eines Zwangsmischers 1 vertikal versetzt wird. Dadurch wird obere Flüssigkeitsschicht 10 des in Vortriebrichtung 6 zuerst angeströmten Zwangsmischers 1 in jedem Zwangsmischer 1 der Versatzanordnung 54 um jeweils eine Position nach unten versetzt und verlässt den letzten Zwangsmischer 1 als untere Flüssigkeitsschicht 8. Bei einer Bewegungsrichtung entgegen der angegebenen Vortriebbewegung 6 würde die untere Flüssigkeitsschicht 8 des unteren, zuerst angeströmten Zwangsmischers 1 ganz nach oben befördert und den oberen Zwangsmischer 1 als obere Flüssigkeitsschicht 10 verlassen.

### Bezugszeichenliste

- 1: Zwangsmischer, Umwälzanordnung
- 2: Gehäuse
- 6: Vortriebbewegung
- 8: untere Flüssigkeitsschicht
- 10: obere Flüssigkeitsschicht
- 11: Wasseroberfläche
- 12: Eintrittsöffnung
- 14: Austrittsöffnung
- 16: Strömung, Strömungskanal
- 18: Deckfläche
- 20: Grundfläche
- 22: Seitenwand
- 24: Leiteinrichtung
- 26: Wendelabschnitt
- 28: Abrisskante
- 30: Zusatzaggregat, Sieb
- 32: Zusatzaggregat, Siebtrommel
- 34: Zusatzaggregat, Bürstenwalze
- 40: Zusatzaggregat, Pumpe
- 42: Pumpenrohr
- 44: Pumpenauslass
- 46: Rieselfläche
- 48: Ablauffläche
- 50: Sprühstrahl
- 52: Vertikalanordnung
- 54: Versatzanordnung
- v: Vertikalkomponente
- h: Horizontalkomponente
- H: Höhe

## Patentansprüche

1. Einrichtung zum Umwälzen eines Flüssigkeitskörpers, umfassend eine Umwälzanordnung (1), **dadurch gekennzeichnet, dass** die Umwälzanordnung (1) als Zwangsmischer (1) ausgeführt ist, der passiv wirkt und mittels eingebauter Leiteinrichtung (24), die wenigstens zwei im Inneren eines Gehäuses (2) des Zwangsmischers (1) zwischen einer Eintrittsöffnung (12) und einer Austrittsöffnung (14) separat geführte, sich kreuzende Strömungen (16) erzeugen, wobei eine untere Flüssigkeitsschicht (8) nach oben und eine obere Flüssigkeitsschicht (10) zugleich nach unten gefördert wird, wobei der Zwangsmischer (1) bis an den unteren Bereich der unteren Flüssigkeitsschicht (8), die mit der oberen Flüssigkeitsschicht (10) ausgetauscht werden soll, reicht.

2. Einrichtung nach Anspruch 1, wobei die Leiteinrichtung (24) innerhalb des Gehäuses (2) angeordnet ist, dessen parallel zueinander angeordnete Deckfläche (18) und Grundfläche (20) sowie zwei gegenüberliegende Seitenwände (22) geschlossen und die beiden anderen Seitenflächen offen sind, um die Eintrittsöffnung (12) und die Austrittsöffnung (14) zu bilden, wobei sich im Inneren des Gehäuses (2) die Leiteinrichtung (24) in der Weise erstreckt, dass sie an der Eintrittsöffnung (12) und an der Austrittsöffnung (14) mittig zwischen einer oberen und einer unteren Hälfte des Gehäuses (2) eine horizontale Trennkante zeigt, die dem Mittendurchgang von zwei Abschnitten einer Sinuskurve entsprechen, die aus zwei aneinander gefügten Wendelabschnitten (26) von in gegengesetzter Richtung um 180° um eine Achse, die einer mittleren Strömungsrichtung entspricht, gewendelten Spiralen besteht, wodurch ein erster Strömungskanal (16) mit einer ersten Vertikalkomponente zwischen beiden Wendelabschnitten (26) und ein zweiter Strömungskanal (16) mit einer zweiten, zur ersten Vertikalkomponente gegenläufigen Vertikalkomponente zwischen jeweils einem Wendelabschnitt (26) und der angrenzenden Seitenfläche (22) entstehen.

3. Einrichtung nach Anspruch 1 oder 2, wobei wenigstens zwei quaderförmige Gehäuse (2) mit den Seitenwänden (22) aneinandergefügt sind, oder wobei die geschlossen Seitenflächen (22) halbkreisförmig gewölbt sind.

4. Einrichtung nach einem der Ansprüche 1 bis 3, wobei wenigstens ein Zusatzaggregat (30, 32, 34, 40) zur Verbesserung des Sauerstoffeintrags an der Eintrittsöffnung (12) und/oder an der Austrittsöffnung (14) vorgesehen ist.

5. Einrichtung nach Anspruch 4, wobei das Zusatzaggregat (30, 32, 34) zur Verbesserung des Sauerstoffeintrags als horizontal im Bereich der Wasseroberfläche angeordnetes Sieb (30), als Siebtrommel (32) oder Bürstenwalze (34), die teilweise in die Wasseroberfläche eintauchen, ausgebildet ist.

6. Einrichtung nach Anspruch 4, wobei das Zusatzaggregat (40) zur Verbesserung des Sauerstoffeintrags als eine Pumpe (40) ausgeführt ist, wobei nach einer ersten Ausführungsform ein Sprühstrahl (50) erzeugt wird und Wassertropfen auf die Wasseroberfläche fallen, wobei nach einer zweiten Ausführungsform das Wasser über eine Rieselfläche (46) an der Deckfläche (18) des Zwangsmischers (1) läuft und sich dort mit Sauerstoff anreichert, ehe es auf die Wasseroberfläche fließt.

7. Einrichtung nach einem der Ansprüche 1 bis 6, wobei an einer Austrittsöffnung (14) eine Abrisskante (28) angeordnet ist.

8. Einrichtung nach einem der Ansprüche 1 bis 7, wobei drei separate, durch Horizontalwände abgetrennte Leiteinrichtungen (24) in einem Gehäuse (2) zusammengefasst sind

9. Einrichtung nach einem der Ansprüche 1 bis 8, wobei das Gehäuse (2) eine Arbeitsbreite von 2 m, eine Länge von 1 m und eine Höhe von 0,5 m oder einer Skalierung dieser Dimensionen aufweist.

10. Einrichtung nach einem der Ansprüche 1 bis 9, wobei mehrere Zwangsmischer (1) in einer Arbeitsposition übereinander, Deckfläche (18) an Grundfläche (20), zu einer Vertikalanordnung (52) angeordnet sind.

11. Einrichtung nach einem der Ansprüche 1 bis 10, wobei mehrere Zwangsmischer (1) horizontal stufenweise versetzt zu einer Versatzanordnung (54) angeordnet sind, indem die untere Hälfte der Austrittsöffnung (14) des oberen Zwangsmischers (1) mit der oberen Hälfte der Eintrittsöffnung (12) des unteren Zwangsmischers (1) in der Weise verbunden ist, dass der Fluidstrom in jedem der versetzt angeordneten Zwangsmischers (1) um die Höhe eines Zwangsmischers (1) vertikal versetzt wird.

12. Einrichtung nach einem der Ansprüche 1 bis 11, wobei eine Vortriebeinrichtung für die Umwälzanordnung (8) umfasst ist, die als ein Schleppboot, ein Seilzug oder ein autonomer Antrieb ausgeführt ist.

13. Einrichtung nach Anspruch 12, wobei der autonome Antrieb als ein rotierendes Siebtrommel (32) oder Bürstenwalze (34) nach Anspruch 6, wobei deren Rotation im Sinne eines Schaufelrads den Vortrieb bewirkt, oder als eine Wasserpumpe (40) nach Anspruch 7, wobei zumindest deren Ansaugstrom den Vortrieb bewirkt, ausgeführt ist.

14. Verfahren zum Betrieb einer Einrichtung (1) zum Umwälzen eines Flüssigkeitskörpers gemäß einem der Ansprüche 1 bis 13, **dadurch gekennzeichnet, dass** die Umwälzanordnung (1) als Zwangsmischer (1), der passiv wirkt, ausgeführt ist, der mittels eingebauter Leiteinrichtungen (24) während der horizontalen Vortriebbewegung (6) eine untere Flüssigkeitsschicht (8) nach oben und eine obere Flüssigkeitsschicht (10) zugleich nach unten fördert, und wobei das Umwälzen in wenigstens einer Bewegungsrichtung des Zwangsmischers (1) in horizontaler Richtung mit einer Geschwindigkeit von 0,4 bis 0,5 m/s erfolgt.

15. Verwendung einer Einrichtung nach einem der Ansprüche 1 bis 13 in einem Fischteich oder in einer Anlage für Aquakultur oder einem Klärbecken einer Kläranlage.
